# NOUVEAU FASCICULE DE BREVET EUROPEEN

(11) **EP 3 768 950 B2**
(45) Date de publication et mention de la décision concernant l'opposition: **14.01.2026**
(45) Mention de la délivrance du brevet: 09.02.2022
(21) Numéro de dépôt: 19718432.8
(22) Date de dépôt: 19.03.2019
(51) Int. Cl.: F01D 5/34, F01D 11/00, F04D 29/32

(54) **DISQUE AUBAGÉ MONOBLOC SOUPLE EN PARTIE BASSE DES AUBES**
IM UNTEREN TEIL DER SCHAUFELN FLEXIBLE SCHAUFELSCHEIBE
BLADED DISK FLEXIBLE IN THE LOWER PART OF THE BLADES

(30) Priorité: 19.03.2018 FR 1852337
(43) Date de publication de la demande: 27.01.2021
(73) Titulaire: SAFRAN AIRCRAFT ENGINES, 75015 Paris (FR)
(72) Inventeur: JABLONSKI, Laurent, 77550 Moissy-Cramayel (FR); COMIN, François, Jean, 77550 Moissy-Cramayel (FR); JOLY, Philippe, Gérard, Edmond, 77550 Moissy-Cramayel (FR); PERROLLAZ, Jean-Marc, Claude, 77550 Moissy-Cramayel (FR); LAFITTE, Anthony, 77550 Moissy-Cramayel (FR); MERCIER, Rémi, Roland, Robert, 77550 Moissy-Cramayel (FR)
(74) Mandataire: Regimbeau
(86) Numéro de dépôt international: PCT/FR2019/050616
(87) Numéro de publication internationale: WO 2019/180366

(56) Documents cités:
- WO-A1-2016/139416
- WO-A2-2015/130381
- CN-B- 104 314 619
- US-A1- 2006 099 078
- US-A1- 2011 064 580
- US-A1- 2014 205 441
- US-A1- 2015 267 545

## Description

### DOMAINE DE L'INVENTION

L'invention concerne de manière générale les moteurs à turbine à gaz, et plus particulièrement un disque de soufflante d'un tel moteur de type turboréacteur, ce disque étant du type aubagé monobloc, c'est-à-dire qu'il comporte un moyeu et des aubes formant une pièce unique indissociable.

### ARRIERE-PLAN TECHNOLOGIQUE

Une turbomachine à double flux comprend généralement, d'amont en aval dans le sens de l'écoulement des gaz, une soufflante, un espace annulaire d'écoulement primaire et un espace annulaire d'écoulement secondaire. La masse d'air aspirée par la soufflante est donc divisée en un flux primaire et en un flux secondaire qui est concentrique avec le flux primaire.

Le flux primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

De façon connue en soi, les aubes de la soufflante sont fixées sur un disque, appelé disque de soufflante, qui est entrainé par les étages de turbine par l'intermédiaire d'un arbre moteur. Les aubes de soufflantes peuvent être rapportées et fixées sur le disque de soufflante. En variante, les aubes de soufflante peuvent être formées intégralement et en une seule pièce avec un moyeu en formant avec celui-ci une pièce unique et indissociable appelé disque aubagé monobloc (ou DAM). Le moyeu de ce disque aubagé monobloc est relié aux aubes de soufflante au niveau de leur pied.

Dans le cas d'un disque aubagé monobloc, l'ingestion d'un corps étranger donne lieu à une concentration de contraintes mécanique qui est maximale au niveau de la base des aubes heurtées, c'est-à-dire au niveau de la jonction de chacune de ces aubes avec le moyeu. Cette situation est due au fait que la structure monobloc donne lieu à une plus grande rigidité des aubes au niveau de leur liaison avec le moyeu. En cas d'ingestion d'un corps étranger dans la turbomachine, les aubes heurtées sont fortement sollicitées en flexion, ce qui tend à accroître encore la contrainte mécanique au niveau de la base des aubes et risque de les arracher du moyeu.

Il a donc été proposé, dans le document FR 3 028 574 au nom de la Demanderesse, un disque aubagé monobloc d'une soufflante dans lequel la pale est agencée pour dépasser, du côté amont, de son bord d'attaque et/ou, du côté aval, de son bord de fuite. Une telle configuration permet d'obtenir un gain en souplesse et en flexibilité des aubes et d'améliorer leur tenue au choc de façon significative.

Le document US 2006/099078 décrit un mécanisme de soulagement des contraintes dans un disque aubagé monobloc.

Le document CN104314619 décrit une structure d'ajustement de la fréquence naturelle d'un disque aubagé monobloc.

### RESUME DE L'INVENTION

Un objectif de l'invention est de proposer une autre solution pour réduire le niveau de contrainte en base de pale en particulier en cas d'ingestion de corps étranger.

Pour cela, l'invention propose un disque aubagé monobloc d'un étage d'une turbomachine, notamment d'une soufflante, comprenant :
- un moyeu comprenant un bord amont, un bord aval et une plateforme radiale s'étendant entre le bord amont et le bord aval et configurée pour définir via une face radialement externe une veine interne d'écoulement d'un gaz dans la turbomachine, et
- une pluralité d'aubes, lesdites aubes s'étendant radialement depuis la plateforme et étant formées intégralement et en une seule pièce avec ladite plateforme, chaque aube comprenant un pied relié à la plateforme, un bord d'attaque et un bord de fuite.

Une rainure traversante est par ailleurs formée dans la plateforme autour d'une partie du pied de chaque aube dans une zone adjacente au bord d'attaque et/ou au bord de fuite. De plus, le disque aubagé monobloc comprend en outre un joint placé dans la rainure de manière à s'étendre dans le prolongement de la face radialement externe de la plateforme afin d'assurer une continuité de la veine interne d'écoulement, et en ce que ladite rainure débouche sur le bord de la plateforme le plus proche parmi le bord amont ou le bord aval.

Certaines caractéristiques préférées mais non limitatives du disque aubagé monobloc décrit ci-dessus sont les suivantes, prises individuellement ou en combinaison :
- le joint assure en outre une fonction d'étanchéité avec un étage en aval de la turbomachine.
- la plateforme présente en outre une face radialement interne opposée à la face radialement externe et les rainures débouchant dans la face radialement interne, et dans lequel le joint comprend une virole annulaire configurée pour venir en appui contre la face radialement interne de la plateforme et une pluralité de protubérances configurées pour se loger chacune dans une rainure associée.
- le joint forme un rayon de raccordement du pied de l'aube.
- la rainure s'étend autour du bord de fuite de l'aube correspondante.
- la rainure s'étend le long de l'aube associée sur une distance comprise entre 5% et 20% d'une corde de l'aube associée.
- une raideur du joint est inférieure à une raideur de la plateforme.
- la raideur du joint est au plus égale à 50% de la raideur de la plateforme.

Selon un deuxième aspect, l'invention propose également une soufflante comprenant un disque aubagé monobloc comme décrit ci-dessus.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

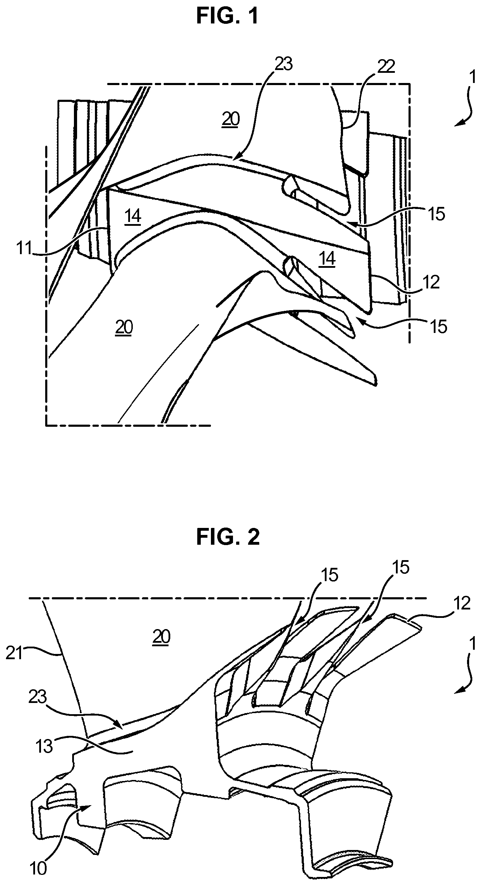

La figure 1 est une vue du dessus d'un secteur d'un premier exemple de réalisation d'un disque aubagé monobloc conforme à l'invention, sur laquelle le joint a été omis.
La figure 2 est une vue de côté du secteur de la figure 1, sur laquelle le joint a été omis.

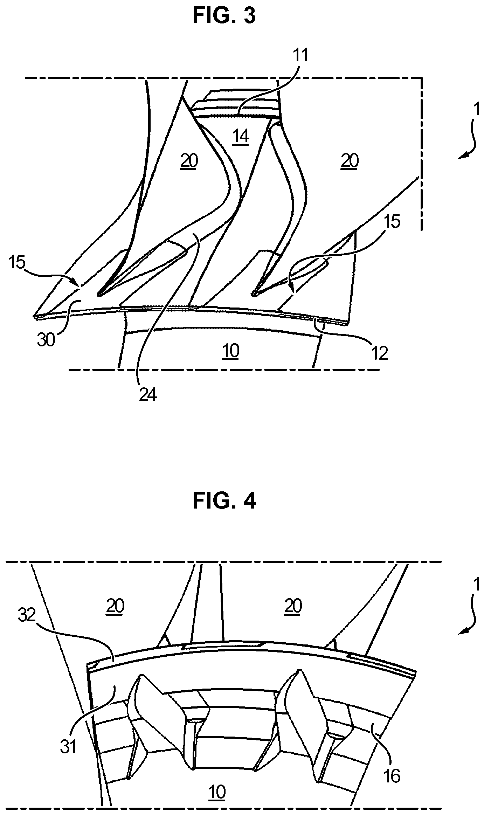

La figure 3 est une vue arrière du secteur de la figure 1, sur laquelle le joint a été représenté.
La figure 4 est une vue de dessous du secteur de la figure 1, sur laquelle le joint a été représenté.
La figure 5 est une vue depuis le bord aval d'un deuxième exemple de réalisation d'un secteur de disque aubagé monobloc conforme à l'invention, sur laquelle le joint a été omis.
La figure 6 est une vue depuis le bord amont du disque aubagé monobloc de la figure 5.

### DESCRIPTION DETAILLEE D'UN MODE DE REALISATION

Un secteur d'un disque 1 aubagé monobloc conforme à un mode de réalisation a été partiellement représenté sur les figures annexées. Un tel disque 1 aubagé monobloc peut être utilisé dans toute partie tournante ou fixe d'une turbomachine, et plus particulièrement pour la partie tournante d'une soufflante.

Le disque 1 comprend un moyeu 10 comprenant un bord amont 11, un bord aval 12 et une plateforme 13 radiale externe s'étendant entre le bord amont 11 et le bord aval 12. La face radialement externe 14 de la plateforme 13 est configurée pour définir la veine interne de l'écoulement gazeux dans la turbomachine.

Le disque 1 comprend en outre une pluralité d'aubes 20 s'étendant radialement depuis la plateforme 13. Chaque aube 20 est formée intégralement et en une seule pièce avec la plateforme 13 et comprend un pied 23 relié à la plateforme 13, un bord d'attaque 21 et un bord de fuite 22. Le pied est ici une base de raccordement de l'aube à la plateforme 13 et au moyeu 10.

Par bord d'attaque 21 on comprendra ici le bord de l'aube 20 qui est disposé en regard de l'écoulement gazeux dans la turbomachine. Le bord de fuite 22 est opposé au bord d'attaque 21. Enfin, chaque aube 20 présente une corde, qui est définie comme un segment fictif reliant le bord d'attaque 21 et le bord de fuite 22 au niveau du pied 23 de l'aube 20.

Afin d'assouplir le disque 1, une rainure 15 est formée dans la plateforme 13 autour d'une partie du pied 23 de chaque aube 20 dans une zone adjacente au bord d'attaque 21 et/ou au bord de fuite 22 de l'aube 20. Par ailleurs, un joint 30 est placé dans la rainure 15 de sorte qu'il s'étende dans le prolongement du reste de la plateforme 13 et assure ainsi une continuité de la veine d'écoulement. En d'autres termes, grâce au joint 30 logé dans la rainure 15, la face radialement externe 14 de la plateforme 13 vue par l'écoulement gazeux est sensiblement lisse et similaire à la face radialement externe 14 d'une plateforme 13 conventionnelle, limitant ainsi les pertes de charge.

Le choix de l'emplacement de la rainure 15 autour du pied 23 de l'aube 20 dépend du lieu privilégié de déchirure ou d'arrachement de l'aube 20 en cas d'ingestion. Typiquement, lorsque le lieu privilégié de déchirure se trouve au niveau du pied 23 d'aube 20 du côté de son bord de fuite 22, la rainure 15 est formée autour du bord de fuite 22. En variante, lorsque le lieu privilégié de déchirure se trouve au niveau de son bord d'attaque 21, la rainure 15 est formée autour du bord d'attaque 21.

La rainure 15 est traversante, c'est-à-dire qu'elle débouche à la fois dans la face radialement externe 14 et dans la face radialement interne 16 de la plateforme 13.

Dans les exemples illustrés sur les figures, conformément à l'invention, la rainure 15 est traversante.

La plateforme 13 peut comprendre autant de joints 30 que de rainures 15, de sorte qu'un joint 30 est logé dans chaque rainure 15.

En variante, un même joint 30 peut être logé dans plusieurs rainures 15. Dans ce cas, les rainures 15 débouchent dans la face radialement interne 16 de la plateforme 13 et le joint 30 comprend une virole annulaire 31, configurée pour venir en appui contre la face radialement interne 16 de la plateforme 13 et des protubérances 32 configurées pour se loger chacune dans une rainure 15 associée. La virole annulaire 31 peut être monobloc ou sectorisée.

Le joint 30 est choisi de manière à présenter une raideur plus faible que celle de la plateforme 13 et permettre ainsi le débattement du disque 1 autour des aubes 20 lors d'une ingestion, ce qui réduit le niveau de contraintes au niveau de la base des aubes 20. Par exemple, la raideur du joint 30 est au plus égale à 50% de la raideur de la plateforme 13. Le joint pourra par exemple être en élastomère, polyuréthane ou toute autre matière pouvant à la fois être souple et pouvoir résister aux effets centrifuges.

Par raideur d'un corps donné, on comprendra ici la caractéristique indiquant la résistance à la déformation élastique du corps. Plus une pièce est raide, plus il est donc nécessaire de lui appliquer un effort important pour obtenir une déflexion donnée.

Dans une forme de réalisation, la rainure 15 débouche sur le bord de la plateforme 13 le plus proche parmi le bord amont 11 ou le bord aval 12 de la plateforme 13. Ainsi, lorsque la rainure 15 est formée autour du bord de fuite 22, elle débouche sur le bord aval 12 de la plateforme 13. Dans l'exemple de réalisation conforme à l'invention dans lequel la rainure est traversante ladite rainure 15 constitue donc une échancrure dans ce bord aval 12. En variante, lorsque la rainure 15 est formée autour du bord d'attaque 21, elle débouche sur le bord amont 11 de la plateforme 13. Dans l'exemple de réalisation conforme à l'invention dans lequel la rainure est traversante, ladite rainure 15 constitue donc une échancrure dans ce bord amont 11.

Une telle forme de réalisation permet d'augmenter encore la flexibilité et la souplesse du disque 1 aubagé monobloc.

Dans l'exemple de rainure en échancrure telle que représenté, cette rainure 15 s'étend en étant directement délimitée par la base de raccordement de l'aube 20. En d'autres termes, le joint 30 comprend la matière formant le rayon de raccordement 24 de l'aube 20 à la plateforme 13. En considérant la matière commune au moyeu 10 et à l'aube 20 du disque, la plateforme 13 est donc à distance du pied de l'aube 20 et est séparée de celui-ci par le joint 30. Il n'y a donc pas ici de bande de plateforme immédiatement adjacente autrement que par la matière du joint. Une telle forme de réalisation confère une souplesse accrue au disque grâce à l'absence de plateforme rigide.

La rainure 15 peut par exemple être réalisée par détourage.

Dans une forme de réalisation, la rainure 15 s'étend le long de l'aube 20 associée sur une distance comprise entre 5% et 20% de la corde de ladite aube 20, afin d'obtenir la flexibilité et la souplesse nécessaires pour limiter les risques d'endommagement du disque 1 en cas d'ingestion, tout en garantissant une tenue suffisante du disque 1 en fonctionnement normal.

On notera que le joint 30 peut également assurer une fonction d'étanchéité avec l'étage immédiatement en aval. Typiquement, dans le cas d'un disque 1 aubagé monobloc d'une soufflante, le joint 30 permet d'assurer une étanchéité avec l'étage de compresseur basse pression (ou booster en anglais) immédiatement en aval.

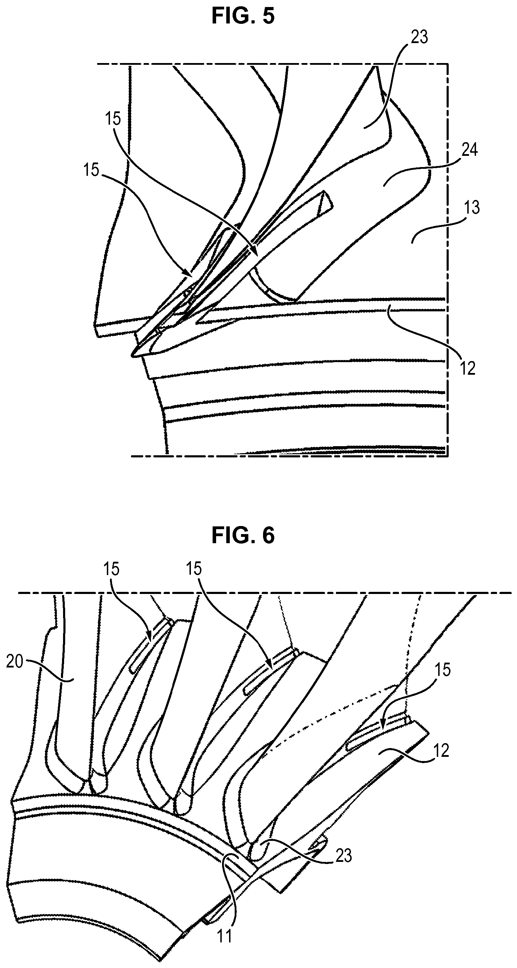

Dans une variante de réalisation illustrée en figures 5 et 6, une rainure 15 peut être réalisée de part et d'autre de chaque pied d'aube 20, de préférence au niveau du rayon de raccordement de l'aube 20. Les rainures s'étendent alors sensiblement parallèlement à l'intrados et à l'extrados de l'aube 20 en question et débouche sur le bord aval 12 ou le bord amont 11 de la plateforme 13 (selon que les rainures 15 soient réalisée au niveau du bord d'attaque 21 ou du bord de fuite 22 de l'aube 20, respectivement). Un joint 30 est par ailleurs logé dans chaque rainure 15. Les rainures sont traversantes conformément à l'invention, comme illustré sur les figures.

## Revendications

1. Disque aubagé monobloc (1) d'un étage d'une turbomachine, notamment d'une soufflante, comprenant :
- un moyeu (10) comprenant un bord amont (11), un bord aval (12) et une plateforme (13) radiale s'étendant entre le bord amont (11) et le bord aval (12) et configurée pour définir via une face radialement externe (14) une veine interne d'écoulement d'un gaz dans la turbomachine,
- une pluralité d'aubes (20), lesdites aubes (20) s'étendant radialement depuis la plateforme (13) et étant formées intégralement et en une seule pièce avec ladite plateforme (13), chaque aube (20) comprenant un pied (23) relié à la plateforme (13), un bord d'attaque (21) et un bord de fuite (22),
le disque aubagé monobloc (1) étant **caractérisé en ce qu'**une rainure (15) traversante est formée dans la plateforme (13) autour d'une partie du pied (23) de chaque aube (20) dans une zone adjacente au bord d'attaque (21) et/ou au bord de fuite (22), et **en ce que** le disque aubagé monobloc (1) comprend en outre un joint (30) placé dans la rainure (15) de manière à s'étendre dans le prolongement de la face radialement externe (14) de la plateforme (13) afin d'assurer une continuité de la veine interne d'écoulement, et **en ce que** ladite rainure (15) débouche sur le bord de la plateforme (13) le plus proche parmi le bord amont (11) ou le bord aval (12).

2. Disque aubagé monobloc (1) selon la revendication 1, dans lequel le joint (30) assure en outre une fonction d'étanchéité avec un étage en aval de la turbomachine.

3. Disque aubagé monobloc selon l'une des revendications 1 ou 2, dans lequel la plateforme (13) présente en outre une face radialement interne (16) opposée à la face radialement externe (14) et les rainures (15) débouchant dans la face radialement interne (16), et dans lequel le joint comprend une virole annulaire (31) configurée pour venir en appui contre la face radialement interne (16) de la plateforme (13) et une pluralité de protubérances (32) configurées pour se loger chacune dans une rainure (15) associée.

4. Disque aubagé monobloc (1) selon l'une des revendications 1 à 3, dans lequel le joint (30) forme un rayon de raccordement du pied (23) de l'aube (20).

5. Disque aubagé monobloc (1) selon l'une des revendications 1 à 4, dans lequel la rainure (15) s'étend autour du bord de fuite (22) de l'aube (20) correspondante.

6. Disque aubagé monobloc (1) selon l'une des revendications 1 à 5, dans lequel la rainure (15) s'étend le long de l'aube (20) associée sur une distance comprise entre 5% et 20% d'une corde de l'aube (20) associée.

7. Disque aubagé monobloc (1) selon l'une des revendications 1 à 6, dans lequel une raideur du joint (30) est inférieure à une raideur de la plateforme (13).

8. Disque aubagé monobloc (1) selon la revendication 7, dans lequel la raideur du joint (30) est au plus égale à 50% de la raideur de la plateforme (13).

9. Soufflante comprenant un disque aubagé monobloc (1) selon l'une des revendications 1 à 8.

## Patentansprüche

1. Einstückige Schaufelscheibe (1) einer Stufe einer Turbomaschine, insbesondere eines Gebläses, umfassend:
- eine Nabe (10), umfassend eine stromaufwärtige Kante (11), eine stromabwärtige Kante (12) und eine radiale Plattform (13), die sich zwischen der stromaufwärtigen Kante (11) und der stromabwärtigen Kante (12) erstreckt und ausgestaltet ist, über eine radial äußere Fläche (14) eine innere Ader zur Strömung eines Gases in die Turbomaschine zu definieren,
- eine Vielzahl von Schaufeln (20), wobei sich die Schaufeln (20) ausgehend von der Plattform (13) radial erstrecken und integral und aus einem einzigen Teil mit der Plattform (13) gebildet sind, wobei jede Schaufel (20) einen Fuß (23), der mit der Plattform (13) verbunden ist, eine Anströmkante (21) und eine Abströmkante (22) umfasst,
wobei die einstückige Schaufelscheibe (1) **dadurch gekennzeichnet ist, dass** eine durchsetzende Rille (15) in der Plattform (13) um einen Teil des Fußes (23) jeder Schaufel (20) in einer Zone gebildet ist, die an die Anströmkante (21) und/oder an die Abströmkante (22) angrenzt, und dadurch, dass die einstückige Schaufelscheibe (1) weiter eine Dichtung (30) umfasst, die in der Rille (15) angeordnet ist, sodass sie sich in der Verlängerung der radial äußeren Fläche (14) der Plattform (13) erstreckt, um eine Kontinuität der inneren Ader zur Strömung sicherzustellen, und dadurch, dass die Rille (15) auf der von der stromaufwärtigen Kante (11) oder stromabwärtigen Kante (12) nächstgelegenen Kante der Plattform (13) mündet.

2. Einstückige Schaufelscheibe (1) nach Anspruch 1, wobei die Dichtung (30) weiter eine Dichtungsfunktion mit einer Stufe stromabwärts der Turbomaschine sicherstellt.

3. Einstückige Schaufelscheibe nach einem der Ansprüche 1 oder 2, wobei die Plattform (13) weiter eine radial innere Fläche (16), die der radial äußeren Fläche (14) gegenüberliegt, und die Rillen (15) aufweist, die in die radial innere Fläche (16) münden, und wobei die Dichtung einen Mantelring (31) umfasst, der ausgestaltet ist, gegen die radial innere Fläche (16) der Plattform (13) zu drücken, und eine Vielzahl von Vorsprüngen (32), die ausgestaltet sind, jeweils in einer zugehörigen Rille (15) aufgenommen zu werden.

4. Einstückige Schaufelscheibe (1) nach einem der Ansprüche 1 bis 3, wobei die Dichtung (30) einen Verbindungsradius des Fußes (23) der Schaufel (20) bildet.

5. Einstückige Schaufelscheibe (1) nach einem der Ansprüche 1 bis 4, wobei sich die Rille (15) um die Abströmkante (22) der entsprechenden Schaufel (20) erstreckt.

6. Einstückige Schaufelscheibe (1) nach einem der Ansprüche 1 bis 5, wobei sich die Rille (15) entlang der zugehörigen Schaufel (20) auf einer Distanz erstreckt, die zwischen 5 % und 20 % einer Sehne der zugehörigen Schaufel (20) beträgt.

7. Einstückige Schaufelscheibe (1) nach einem der Ansprüche 1 bis 6, wobei eine Steifigkeit der Dichtung (30) geringer ist als eine Steifigkeit der Plattform (13).

8. Einstückige Schaufelscheibe (1) nach Anspruch 7, wobei die Steifigkeit der Dichtung (30) höchstens gleich 50 % der Steifigkeit der Plattform (13) beträgt.

9. Gebläse, umfassend eine einstückige Schaufelscheibe (1) nach einem der Ansprüche 1 bis 8.

## Claims

1. A blisk (1) of a stage of a turbomachine, in particular of a fan, comprising:
- a hub (10) comprising an upstream edge (11), a downstream edge (12) and a radial platform (13) extending between the upstream edge (11) and the downstream edge (12) and configured to define, via a radially outer face (14), an inner flowpath of a gas in the turbomachine,
- a plurality of blades (20), said blades (20) extending radially from the platform (13) and being formed integrally and in one piece with said platform (13), each blade (20) comprising a root (23) connected to the platform (13), a leading edge (21) and a trailing edge (22),
the blisk (1) being **characterised in that** a through groove (15) is formed in the platform (13) around part of the root (23) of each blade (20) in an area adjacent to the leading edge (21) and/or to the trailing edge (22), and **in that** the blisk (1) further comprises a seal (30) placed in the groove (15) so as to extend in the extension of the radially outer face (14) of the platform (13) in order to ensure a continuity of the inner flowpath, and **in that** said groove (15) opens out onto the nearest edge of the platform (13) among the upstream edge (11) or the downstream edge (12).

2. The blisk (1) according to claim 1, wherein the seal (30) further ensures a sealing function with a stage downstream of the turbomachine.

3. The blisk according to one of claims 1 or 2, wherein the platform (13) further has a radially inner face (16) opposite the radially outer face (14) and the grooves (15) opening out into the radially inner face (16), and wherein the seal comprises an annular shroud (31) configured to bear against the radially inner face (16) of the platform (13) and a plurality of protrusions (32) configured to be housed each in an associated groove (15).

4. The blisk (1) according to one of claims 1 to 3, wherein the seal (30) forms a radius of connection of the root (23) of the blade (20).

5. The blisk (1) according to one of claims 1 to 4, wherein the groove (15) extends around the trailing edge (22) of the corresponding blade (20).

6. The blisk (1) according to one of claims 1 to 5, wherein the groove (15) extends along the associated blade (20) over a distance comprised between 5% and 20% of a chord of the associated blade (20).

7. The blisk (1) according to one of claims 1 to 6, wherein a stiffness of the seal (30) is less than a stiffness of the platform (13).

8. The blisk (1) according to claim 7, wherein the stiffness of the seal (30) is at most equal to 50% of the stiffness of the platform (13).

9. A fan comprising a blisk (1) according to one of claims 1 to 8.
